# EUROPÄISCHE PATENTSCHRIFT

(11) **EP 1 031 781 B1**
(45) Veröffentlichungstag und Bekanntmachung des Hinweises auf die Patenterteilung: **25.08.2004**
(21) Anmeldenummer: 00890046.6
(22) Anmeldetag: 18.02.2000
(51) Int. Cl.: F16L 47/04, F16L 33/22

(54) **Rohranschluss an ein Verbindungs- oder Formstück von Rohrleitungen**
Connection of a pipe to a connecting piece or shaped part of a pipeline
Raccord d'un tuyau à une pièce de connexion ou de liaison d'une canalisation

(30) Priorität: 25.02.1999 AT 32099
(43) Veröffentlichungstag der Anmeldung: 30.08.2000
(73) Patentinhaber: KE-KELIT Kunststoffwerk Gesellschaft m.b.H., A-4017 Linz (AT)
(72) Erfinder: Rametsteiner, Karl, 4040 Linz (AT)
(74) Vertreter: Hübscher, Helmut, Dipl.-Ing.

(56) Entgegenhaltungen:
- FR-A- 1 244 948
- US-A- 4 932 689
- US-A- 5 140 738
- US-A- 5 669 637

## Beschreibung

Die Erfindung bezieht sich auf einen Rohranschluß eines Kunststoffrohres an einem Verbindungs- oder Formstück, das einen Stutzen zur Aufnahme des Rohrendes aufweist, wobei das Rohrende eine Dichtungshülse trägt, die mittels einer axial verschiebbaren, innen teilweise konischen Preßhülse zusammendrückbar ist.

Bisher wurden Rohranschlüsse dieser Art aus Metallen, insbesondere Messing, hergestellt, wobei selbstverständlich auch die Rohre aus entsprechenden Metallen bestehen. Um die Preßhülse in diesem Fall über die Dichthülse pressen zu können und eine dichte Verbindung zwischen der Rohrleitung und dem Verbindungs- bzw. Formstück zu erhalten, sind äußerst hohe Kräfte notwendig, die meist mit hydraulischen Werkzeugen erreicht werden. Diese hiefür erforderlichen Preßwerkzeuge sind aber unhandlich, was eine Montage auf der Baustelle natürlich erheblich erschwert. Außerdem ist die Herstellung solcher Metallhülsen mit erheblichen Kosten verbunden, da diese zumeist spanabhebend erzeugt werden.

Anschlüsse für Schläuche an Verbindungs- oder Formstücke, bei denen die Schläuche mittels einer Preßhülse auf einem Stutzen des Verbindungs- oder Formstückes klemmend gehalten werden sind aus der US 4 932 689 A und der US 5 140 738 A bekannt.

Der Erfindung liegt die Aufgabe zugrunde, Rohranschlüsse der eingangs geschilderten Art so zu verbessern, daß sie möglichst kleine Preßkräfte bei geringen Herstellungs- und Verarbeitungkosten aufweisen.

Da in letzter Zeit Metallrohre verstärkt durch Kunststoffrohre ersetzt werden, löst die Erfindung gemäß Auspruch 1 diese Aufgabe dadurch, daß für Kunststoffrohre und Verbindungs- bzw. Formstücke aus Kunststoff auch Dicht- und Preßhülsen aus Kunststoff vorgesehen sind, wobei die Preßhülse aus wesentlich festerem Kunststoff als die Dichtungshülse besteht und die Preßhülse durch Verdrehen gegenüber dem Verbindungs- bzw. Formstück axial verschiebbar ist.

Um die Dicht- und Preßhülsen günstiger herstellen zu können, bestehen diese also aus Kunststoffen und werden im Spritzgußverfahren od. dgl. hergestellt. Dadurch reduzieren sich auch die für eine dichte Verbindung von Kunststoffrohren und Verbindungs- bzw. Formstücken notwendigen Kräfte auf einen Bruchteil der bisherigen Größe, wobei die so erhaltene, nicht mehr lösbare Verbindung eine ausreichende mechanische Festigkeit aufweist. Dabei können selbstverständlich auch Mehrschicht- bzw. Verbundrohre verwendet werden. Da ein Verformen oder Nachgeben der Preßhülse beim Aufpressen auf die Dichthülse verhindert werden soll, ist sie aus einem festeren Kunststoff als die Dichthülse gefertigt, die beim Preßvorgang so verformt bzw. gequetscht wird, daß sie sich an das Kunststoffrohr anpreßt bzw. alle Hohlräume pressend füllt und so für eine dichte Verbindung sorgt. In Folge der geringen Preßkräfte kann auf die Verwendung unhandlicher und schwerer Preßwerkzeuge verzichtet werden. Die erforderlichen Preßkräfte werden bei der vorliegenden Erfindung durch ein Verdrehen der axial verschiebbaren Preßhülse erreicht, wobei das Verdrehen keine Schwierigkeiten bereitet, da es mit herkömmlichen Werkzeugen, wie Rohrzangen, Schraubenschlüssel od. dgl. bewerkstelligt werden kann.

Um ein Mitdrehen der Dichtungshülse beim Verdrehen der Preßhülse zu verhindern, sitzt die Dichtungshülse drehfest auf dem Rohrende.

Die Umsetzung der Drehbewegung in eine axiale Verschiebung wird dadurch erreicht, daß die Dichtungshülse außen zumindest einen Gang eines Steilgewindes aufweist und die Preßhülse mit dem Gegengewinde versehen ist.

Eine besonders kostengünstige und einfach zu fertigende Konstruktion ergibt sich, wenn das Gegengewinde in wenigstens einen Zapfen od. dgl. aufgelöst ist.

Eine spritzgußtechnisch besonders einfach zu fertigende Verdrehsicherung der Dichtungshülse gegenüber der Preßhülse wird erhalten, wenn die Dichtungshülse zur Verdrehsicherung eine Kerbverzahnung aufweist. Es ist aber auch jede andere Art einer Verdrehsicherung möglich, wie beispielsweise ein Zapfen am Verbindungsod. Formstück und eine Nut in der Dichthülse.

Eine andere Ausführungsform eines erfindungsgemäßen Rohranschlusses ergibt sich, wenn der Stutzen des Verbindungs- bzw. Formstückes von einem Mantel umschlossen ist der ein Innengewinde aufweist, wobei in den Zwischenraum zwischen Mantel und Stutzen die Dichtungshülse und die mit dem zugehörigen Außengewinde versehene Preßhülse eingreifen.

Da die Preßhülse forderungsgemäß aus einem Kunststoff höherer Festigkeit gefertigt sein soll als die Dichtungshülse, besteht die Dichtungshülse aus vernetztem Polyäthylen und die Preßhülse aus Polyoxymethylen, Polyamid oder Polyester. Die Dichtwirkung der aus diesen Kunststoffen bestehenden Verbindung wird durch den "Memory Effekt" der aus vernetztem Polyäthylen gefertigten Dichthülse wesentlich verbessert. Wird die verformte Dichthülse nämlich erwärmt, versucht sie ihre ursprüngüche Form vor der Verformung wieder einzunehmen, wird von der Preßhülse aber daran gehindert und die Dichtwirkung durch die so entstehenden Spannungen zusätzlich erhöht.

Zur Erzielung der erforderlichen Festigkeit bestehen der Stutzen aus einem hochfesten und hydrolysefesten Polysulfon, Polyphtalimid, Polyolefinketon oder Polyvinyldiflourid, das mit Mineral- oder Metallfasern verstärkt ist, die Dichtungshülse aus vernetztem Polyäthylen und die Preßhülse aus Polyoxymethylen, Polysulfon oder Polyolefinketonen.

In der Zeichnung ist der Erfindungsgegenstand beispielsweise schematisch dargestellt, und zwar zeigen
Fig. 1 und 2 einen erfindungsgemäßen Rohranschluß in teilgeschnittenem Längsansicht vor der Pressung, und
Fig. 3eine erfindungsgemäße Dichthülse mit Verdrehsicherung in Stirnansicht.

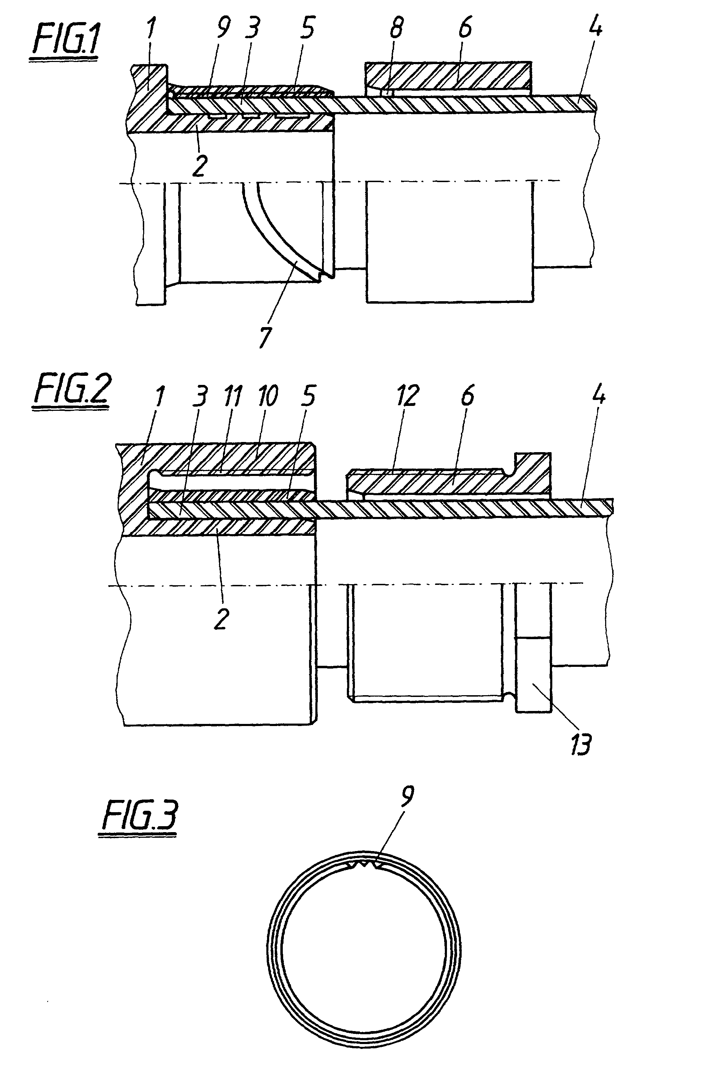

Für den Rohranschluß an ein Verbindungs- oder Formstück 1 weist dieses einen Stutzen 2 auf, der das Rohrende 3 eines Kunststoffrohres 4 aufnimmt. Das Rohrende 3 trägt dabei eine Dichtungshülse 5, die mittels einer verdrehbaren und dabei axial verschiebbaren, innen teilweise konischen Preßhülse 6 zusammendrückbar ist. Die Dichtungshülse 5 weist außen einen Gang eines Steilgewindes 7 auf und die Preßhülse 6 ist mit dem Gegengewinde, das in einen Zapfen 8 aufgelöst ist, versehen. Das axiale Aufpressen der Preßhülse 6 auf die Dichtungshülse 5 erfolgt dabei durch das Verdrehen der Preßhülse 6, weshalb die Dichtungshülse 5 zur Verdrehsicherung eine Kerbverzahnung 9 aufweist (Fig. 1).

Eine andere Ausführungsform eines erfindungsgemäßen Rohranschlusses ergibt sich, wenn der Stutzen 2 des Verbindungs- bzw. Formstückes 1 von einem Mantel 10 umschlossen ist der ein Innengewinde 11 aufweist. Die axiale Preßbewegung wird durch die in den Zwischenraum zwischen Mantel 10, Stutzen 2 und Dichtungshülse 5 eingreifende und mit dem zugehörigen Außengewinde 12 versehene Preßhülse 6 erreicht. Die Preßhülse 6 weist dabei einen Außensechskant 13 auf, um einen herkömmlichen Schraubenschlüssel od. eine Rohrzange für das Verdrehen und damit für den Preßvorgang verwenden zu können (Fig. 2).

## Patentansprüche

1. Rohranschluß eines Kunststoffrohres (4) an einem Verbindungs- oder Formstück (1) aus Kunststoff, das einen Stutzen (2) zur Aufnahme des Rohrendes (3) aufweist, wobei das Rohrende (3) eine Dichtungshülse (5) trägt, die mittels einer axial verschiebbaren, innen teilweise konischen Preßhülse (6) zusammendrückbar ist, wobei auch Dicht- (5) und Preßhülsen (6) aus Kunststoff vorgesehen sind, **dadurch gekennzeichnet, daß** die Preßhülse (6) aus wesentlich festerem Kunststoff als die Dichtungshülse (5) besteht und die Preßhülse (6) durch ein Verdrehen gegenüber dem Verbindungs- bzw. Formstück (1) axial verschiebbar ist.

2. Rohranschluß nach Anspruch 1, **dadurch gekennzeichnet, daß** die Dichtungshülse (5) drehfest auf dem Rohrende sitzt.

3. Rohranschluß nach einem der Ansprüche 1 oder 2, **dadurch gekennzeichnet, daß** die Dichtungshülse (5) außen zumindest einen Gang eines Steilgewindes (7) aufweist und die Preßhülse (6) mit dem Gegengewinde versehen ist.

4. Rohranschluß nach Anspruch 3, **dadurch gekennzeichnet, daß** das Gegengewinde in wenigstens einen Zapfen (8) od. dgl. aufgelöst ist.

5. Rohranschluß nach einem der Ansprüche 1 bis 4, **dadurch gekennzeichnet, daß** die Dichtungshülse (5) zur Verdrehsicherung eine Kerbverzahnung (9) aufweist.

6. Rohranschluß nach Anspruch 1, **dadurch gekennzeichnet, daß** der Stutzen (2) des Verbindungs- bzw. Formstückes (1) von einem Mantel (10) umschlossen ist der ein Innengewinde aufweist, wobei in den Zwischenraum zwischen Mantel (10) und Stutzen (2) die Dichtungshülse (5) und die mit einem zugehörigen Außengewinde versehene Preßhülse (6) eingreifen.

7. Rohranschluß nach einem der Ansprüche 1 bis 6, **dadurch gekennzeichnet, daß** die Dichtungshülse (5) aus vernetztem Polyäthylen und die Preßhülse (6) aus Polyoxymethylen, Polyamid oder Polyester bestehen.

8. Rohranschluß nach einem der Ansprüche 1 bis 6, **dadurch gekennzeichnet, daß** der Stutzen (2) aus einem hochfesten und hydrolysefesten Polysulfon, Polyphtalimid, Polyolefinketon oder Polyvinyldiflourid, das mit Mineral- oder Metallfasern verstärkt ist, daß die Dichtungshülse (5) aus vernetztem Polyäthylen und die Preßhütse aus Polyoxymethylen, Polysulfon oder Polyolefinketonen bestehen.

## Claims

1. A connection of a plastic pipe (4) to a plastic connecting or shaped member (1), comprising a socket (2) to receive the pipe end (3), the pipe end (3) carrying a sealing sleeve (5) which is compressible by means of an axially displaceable and internally partially conical pressure sleeve (6), wherein plastic sealing sleeves (5) and pressure sleeves (6) are also provided, **characterised in that** the pressure sleeve (6) consists of substantially more rigid plastic than the sealing sleeve (5) and the pressure sleeve (6) is axially displaceable by rotation relatively to the connecting or shaped member (1).

2. A pipe connection according to claim 1, **characterised in that** the sealing sleeve (5) is fitted on the pipe end so as to be relatively non-rotatable.

3. A pipe connection according to claim 1 or 2, **characterised in that** the sealing sleeve (5) has on the outside at least one turn of a coarse screwthread (7) and the pressure sleeve (6) is provided with the companion screwthread.

4. A pipe connection according to claim 3, **characterised in that** the companion screwthread leads into at least one pin (8) or the like.

5. A pipe connection according to any one of claims 1 to 4, **characterised in that** the sealing sleeve (5) has a notch toothing (9) as anti-rotation means.

6. A pipe connection according to claim 1, **characterised in that** the socket (2) of the connecting or shaped member (1) is surrounded by a jacket (10) having an internal screwthread, the sealing sleeve (5) and the pressure sleeve (6) provided with an associated outer screwthread engaging in the gap between the jacket (10) and the socket (2).

7. A pipe connection according to any one of claims 1 to 6, **characterised in that** the sealing sleeve (5) consists of cross-linked polyethylene and the pressure sleeve (6) consists of polyoxymethylene, polyamide or polyester.

8. A pipe connection according to any one of claims 1 to 6, **characterised in that** the socket (2) consists of a high-strength and hydrolysis-resistant polysulphone, polyphthalimide, polyolefin ketone or polyvinyldifluoride, reinforced with mineral or metal fibres, and **in that** the sealing sleeve (5) consists of cross-linked polyethylene and the pressure sleeve consists of polyoxymethylene, polysulphone or polyolefin ketones.

## Revendications

1. Raccordement tubulaire d'un tube en matière synthétique (4) sur une pièce de liaison ou de forme (1) en matière synthétique, présentant une tubulure (2) pour recevoir l'extrémité de tube (3), l'extrémité de tube (3) portant une douille d'étanchéité (5) pouvant être comprimée à l'aide d'une douille de pressage (6), intérieurement partiellement conique, pouvant coulisser axialement, où également sont prévues des douilles d'étanchéité (5) et de pressage (6) en matière synthétique, **caractérisé en ce que** la douille de pressage (6) est formée d'une matière synthétique sensiblement plus ferme que la douille d'étanchéité (5), et la douille de pressage (6) est déplaçable axialement par une rotation par rapport à la pièce de liaison ou de forme (1).

2. Raccordement tubulaire selon la revendication 1, **caractérisé en ce que** la douille d'étanchéité (5) est montée de façon assujettie en rotation sur l'extrémité de tube.

3. Raccordement tubulaire selon l'une des revendications 1 ou 2, **caractérisé en ce que** la douille d'étanchéité (5) présente au moins extérieurement un filet à pente raide (7) et la douille de pressage (6) est munie du filetage conjugué.

4. Raccordement tubulaire selon la revendication 3, **caractérisé en ce que** le filetage conjugué est mis en prise, en au moins un téton (8) ou analogue.

5. Raccordement tubulaire selon l'une des revendications 1 à 4, **caractérisé en ce que** la douille d'étanchéité (5) présente un crantage (9) pour produire une sécurité en rotation.

6. Raccordement tubulaire selon la revendication 1, **caractérisé en ce que** la tubulure (2) de la pièce de liaison ou de forme (1) est entourée par une enveloppe (10) présentant un filetage intérieur, sachant que la douille d'étanchéité (5) et la douille de pressage (6), munie d'un filetage extérieur afférent, s'engagent dans l'espace intermédiaire, existant entre l'enveloppe (10) et la tubulure (2).

7. Raccordement tubulaire selon l'une des revendications 1 à 6, **caractérisé en ce que** la douille d'étanchéité (5) est formée d'un polyéthylène réticulé et la douille de pressage (6) est formée de polyoxyméthylène, polyamide ou polyester.

8. Raccordement tubulaire selon l'une des revendications 1 à 6, **caractérisé en ce que** la tubulure (2) est formée de polysulfone, polyphtalimide, polyoléfinecétone ou polydifluorure de vinyle, très résistants et résistants à l'hydrolyse, renforcés par des fibres minérales ou métalliques, **en ce que** la douille d'étanchéité (5) est formée de polyéthylène réticulé et la douille de pressage (6) est formée de polyoxyméthylène, polysulfone ou polyoléfinecétones.
